# EUROPEAN PATENT APPLICATION

(11) **EP 4 783 639 A1**
(43) Date of publication of application: **29.07.2026**
(21) Application number: 23952613.0
(22) Date of filing: 20.09.2023
(51) Int. Cl.: H04W 16/28

(54) **COMMUNICATION METHOD, TERMINAL, NETWORK DEVICE, AND COMMUNICATION SYSTEM**

(71) Applicant: Beijing Xiaomi Mobile Software Co., Ltd., Beijing 100085 (CN)
(72) Inventor: LI, Mingju, Beijing 100085 (CN)
(74) Representative: Dehns Germany Partnerschaft mbB
(86) International application number: PCT/CN2023/120212
(87) International publication number: WO 2025/059954

(57) **Abstract**

The present disclosure relates to a communication method, a terminal, a network device, and a communication system. The method comprises: determining a first condition; and if the first condition is met, reporting a beam report. By means of the embodiments of the present disclosure, the accuracy and timeliness of a beam measurement result can be realized, and signaling overheads are reduced.

## Description

### TECHNICAL FIELD

The present disclosure relates to the field of communication technology, and in particular to a communication method, a terminal, a network device and a communication system.

### BACKGROUND

In New Radio (NR), especially in frequency range 2, in order to ensure coverage, beam-based transmission and reception are required.

### SUMMARY

In scenarios of reporting beam reports, the terminal reports the beam reports based on reporting rules configured by the network device, which would lead to problems such as inappropriate reporting, resulting in high signaling overhead or untimely reporting.

Embodiments of the present disclosure present a communication method, a terminal, a network device, and a communication system.

According to a first aspect of the embodiments of the present disclosure, a communication method is presented, the method including: determining a first condition; and the first condition being met and reporting a beam report.

According to a second aspect of the embodiments of the present disclosure, a communication method is presented, the method including: receiving a beam report, the beam report being reported by a terminal in a case where a first condition is met.

According to a third aspect of the embodiments of the present disclosure, a communication method is presented, the method including: determining, by a terminal, a first condition; and the first condition being met, reporting a first report to a network device.

According to a fourth aspect of the embodiments of the present disclosure, a terminal is presented, including: a processing module configured to determine a first condition; and a transceiver module configured to report a beam report in a case where the first condition is met.

According to a fifth aspect of the embodiments of the present disclosure, a network device is presented, including: a transceiver module configured to receive a beam report, the beam report being reported by a terminal in a case where a first condition is met.

According to a sixth aspect of the embodiments of the present disclosure, a terminal is presented, including: one or more processors; where the processors are configured to perform the communication method in the first aspect.

According to a seventh aspect of the embodiments of the present disclosure, a network device is presented, including: one or more processors; where the processors are configured to perform the communication method in the second aspect.

According to an eighth aspect of the embodiments of the present disclosure, a communication system is presented, including a terminal and a network device, where the terminal is configured to implement the communication method in the first aspect, and the network device is configured to implement the communication method in the second aspect.

According to a ninth aspect of the embodiments of the present disclosure, a storage medium is provided, the storage medium storing instructions, where the instructions, when running on a communication device, cause the communication device to perform the communication method of any of the first aspect and the second aspect.

According to the embodiments of the present disclosure, it enables accurate and timely beam measurement results while reducing signaling overhead.

### BRIEF DESCRIPTION OF THE DRAWINGS

To more clearly illustrate the technical solutions in the embodiments of the present disclosure, the accompanying drawings required for the description of the embodiments are introduced below. The following drawings are only some embodiments of the present disclosure and do not impose specific limitations on the protection scope of the present disclosure.
FIG. 1 is a schematic architecture diagram illustrating a communication system according to an embodiment of the present disclosure.
FIG. 2 is an interactive schematic diagram illustrating a communication method according to an embodiment of the present disclosure.
FIG. 3A is a schematic flowchart illustrating a communication method according to an embodiment of the present disclosure.
FIG. 3B is a schematic flowchart illustrating a communication method according to an embodiment of the present disclosure.
FIG. 3C is a schematic flowchart illustrating a communication method according to an embodiment of the present disclosure.
FIG. 4A is a schematic flowchart illustrating a communication method according to an embodiment of the present disclosure.
FIG. 4B is a schematic flowchart illustrating a communication method according to an embodiment of the present disclosure.
FIG. 5 is an interactive schematic diagram illustrating a communication method according to an embodiment of the present disclosure.
FIG. 6A is a schematic structural diagram of a terminal presented in an embodiment of the present disclosure.
FIG. 6B is a schematic structural diagram of a network device presented in an embodiment of the present disclosure.
FIG. 7A is a schematic structural diagram of a communication device presented in an embodiment of the present disclosure.
FIG. 7B is a schematic structural diagram of a chip presented in an embodiment of the present disclosure.

### DETAILED DESCRIPTION

The embodiments of present disclosure present a communication method, a terminal, a network device, and a communication system.

In a first aspect, the embodiments of present disclosure present determining a first condition; and the first condition being met, reporting a beam report.

In the above embodiments, the terminal is triggered by the condition being met, which can achieve accuracy and timeliness of beam measurement results, and reduce signaling overhead.

In conjunction with some embodiments of the first aspect, in some embodiments, the first condition being met includes at least one of the following: a quality value of a first beam is less than or equal to a first quality value threshold, where the first beam is the current beam; a quality change value of a first beam is greater than or equal to a first quality change value threshold; a quality value of a second beam is greater than or equal to a second quality value threshold, where the second beam is a candidate beam; a first quality value difference is greater than or equal to a first quality value difference threshold, where the first quality value difference is a difference between a quality value of a second beam and a quality value of a first beam; a first beam set is different from a second beam set, where the first beam set includes K beams with the best quality values that are reported most recently, and the second beam set includes L beams with the best quality values that are currently acquired, where K is an integer greater than or equal to 1, and L is an integer greater than or equal to 1; a second beam set does not include a beam that is most recently indicated by the network device; at least one beam group is different between a first beam group set and a second beam group set, where the first beam group set includes M first beam groups that are reported most recently, the second beam group set includes N second beam groups that are currently acquired, and each of the beam groups includes a beam for which the terminal supports at least one of the following: simultaneous transmission, or simultaneous reception; a candidate beam exists in the second beam group set, and a quality value of the candidate beam is greater than or equal to a fifth quality value threshold; a quality value of a beam in the first beam group set is less than or equal to a sixth quality value threshold; a candidate beam exists in the second beam group set, and a quality value of the candidate beam is greater than or equal to a quality value of a beam in the first beam group set; a joint quality value of beams in a second beam group is greater than or equal to a first joint quality value threshold, where the second beam group includes beams for which the terminal supports at least one of the following: simultaneous transmission, or simultaneous reception; a joint quality value of the first beam group is less than or equal to a third joint quality value threshold; a joint quality difference between a joint quality value of the second beam group and a joint quality value of the first beam group is greater than or equal to a joint quality difference threshold; and a second quality value difference is greater than or equal to a second quality value difference threshold, where the second quality difference is an amount of change in a beam quality value of a beam in the first beam group of which the beam quality value changes.

In the above embodiments, by clarifying different conditions of reporting the beam report, the terminal can perform beam reporting based on whether the first condition is triggered in different reporting scenarios.

In conjunction with some embodiments of the first aspect, in some embodiments, the first beam includes at least one of the following: a beam with the highest quality value among beams that are most recently reported by the terminal; a beam that is most recently indicated by the network device; all beams that are most recently reported by the terminal; and a beam with the lowest quality value among the beams that are most recently reported by the terminal.

In conjunction with some embodiments of the first aspect, in some embodiments, the second beam includes at least one of the following: a beam with the quality value being not the largest among the beams that are most recently reported by the terminal; a beam different from the beam that is most recently indicated by the network device; and a beam different from the beam that is most recently reported.

In conjunction with some embodiments of the first aspect, in some embodiments, the first beam set and the second beam set meet at least one of the following: at least one beam is different between the first beam set and the second beam set; the second beam set does not include the beam that is most recently indicated by the network device; and a third quality value difference is greater than or equal to a third quality value difference threshold, the third quality value difference being a difference between the quality value of any beam in the second beam set and the quality value of any beam in the first beam set.

In the above embodiments, the terminal is triggered to report the beam report in the case where the quality of the previously reported beam does not meet the requirements or the quality of the current candidate beam meets the requirements, so that the network device can determine the current beam quality status in a timely manner, thereby improving the communication quality.

In conjunction with some embodiments of the first aspect, in some embodiments, at least one beam group being different between the first beam group set and the second beam group set includes at least one of the following: the changed quality value of a third beam is greater than or equal to a third quality value threshold; and the changed quality value of the third beam is less than or equal to a fourth quality value threshold; where the third beam exists in at least one of the following beam group sets: the first beam group set and the second beam group set, and the third beam is a beam whose quality value has changed.

In the above embodiments, the triggering rules of the first condition are determined based on the changed beams in the beam group set in the beam group set based reporting scenarios, so that the terminal can promptly report to the network device in scenarios where the beam quality changes significantly in the beam group set, and the network device can promptly determine the current beam quality status, thereby improving the communication quality.

In conjunction with some embodiments of the first aspect, in some embodiments, the second beam group includes beams from different beam groups, or the second beam group includes beams from the same beam group.

In conjunction with some embodiments of the first aspect, in some embodiments, determining the first condition includes obtaining first information, and obtaining the first information includes: obtaining first signaling; or obtaining first signaling and second signaling; where the first signaling is used to configure an association between at least one of the following: a first identification, a first condition, a threshold, a difference threshold, a reference signal resource, a reference signal resource set, a measured quantity, a reporting type, and a reporting mode; the second signaling is used to activate the first condition or the first identification configured by the first signaling; the threshold includes at least one of the following: a first quality value threshold, a second quality value threshold, a third quality value threshold, a fourth quality value threshold, a fifth quality value threshold, a sixth quality value threshold, a first quality change value threshold, a first joint quality value threshold, a second joint quality value threshold, and a third joint quality value threshold; the difference threshold includes at least one of the following: a first quality value difference threshold, a second quality value difference threshold, a third quality value difference threshold, and a joint quality value difference threshold.

In conjunction with some embodiments of the first aspect, in some embodiments, the reporting type of the beam report includes at least one of the following: reporting a single beam report; and reporting multiple beam reports, with a time interval between the multiple reports.

In conjunction with some embodiments of the first aspect, in some embodiments, the beam report includes a beam value of at least one of the following: a serving cell, and a cell different from the serving cell.

In conjunction with some embodiments of the first aspect, in some embodiments, the cell different from the serving cell includes a neighboring cell.

In conjunction with some embodiments of the first aspect, in some embodiments, the reporting mode of the beam report includes at least one of the following: reporting based on a non-beam-group form; and reporting based on a beam group form.

In conjunction with some embodiments of the first aspect, in some embodiments, the beam report includes at least one of the following: a quality value of a second beam; an identification of the second beam; quality values of beams included in a second beam set; identifications of beams included in the second beam set; quality values of beams included in a second beam group set; and identifications of beams included in the second beam group set.

In the above embodiments, the relevant beam information obtained from the current measurement is reported, so that the network device can obtain the current communication quality status in a timely manner.

In a second aspect, the embodiments of the present disclosure present a communication method, the method including: receiving a beam report, the beam report being reported by a terminal in a case where a first condition is met.

In conjunction with some embodiments of the second aspect, in some embodiments, the first condition being met includes at least one of the following: a quality value of a first beam is less than or equal to a first quality value threshold, where the first beam is the current beam; a quality change value of the first beam is greater than or equal to a first quality change value threshold; a quality value of a second beam is greater than or equal to a second quality value threshold, where the second beam is a candidate beam; a first quality value difference is greater than or equal to a first quality value difference threshold, where the first quality value difference is a difference between the quality value of the second beam and the quality value of the first beam; a first beam set is different from a second beam set, where the first beam set includes K beams with the best quality values that are reported most recently, and the second beam set includes L beams with the best quality values that are currently acquired, K is an integer greater than or equal to 1, and L is an integer greater than or equal to 1; a second beam set does not include a beam that is most recently indicated by the network device; at least one beam group is different between a first beam group set and a second beam group set, where the first beam group set includes M first beam groups that are reported most recently, the second beam group set includes N second beam groups that are currently acquired, and each of the beam groups includes beams for which the terminal supports at least one of the following: simultaneous transmission, or simultaneous reception; a candidate beam exists in the second beam group set, and a quality value of the candidate beam is greater than or equal to a fifth quality value threshold; a quality value of a beam in the first beam group set is less than or equal to a sixth quality value threshold; a candidate beam exists in the second beam group set, and a quality value of the candidate beam is greater than or equal to a quality value of a beam in the first beam group set; a joint quality value of beams in a second beam group is greater than or equal to a first joint quality value threshold, where the second beam group includes beams for which the terminal supports at least one of the following: simultaneous transmission, or simultaneous reception; a joint quality value of the second beam group and a joint quality value of the first beam group are greater than a second joint quality value threshold; a joint quality value of the first beam group is less than or equal to a third joint quality value threshold; a joint quality difference between a joint quality value of the second beam group and a joint quality value of the first beam group is greater than or equal to a joint quality difference threshold; and a second quality value difference is greater than a second quality value difference threshold, where the second quality difference is an amount of change in a beam quality value of a beam in the first beam group of which the beam quality value changes.

In conjunction with some embodiments of the second aspect, in some embodiments, the first beam includes at least one of the following: a beam with the highest quality value among the beams that are most recently reported by the terminal; a beam that is most recently indicated by the network device; all beams that are most recently reported by the terminal; and a beam with the lowest quality value among beams that are most recently reported by the terminal.

In conjunction with some embodiments of the second aspect, in some embodiments, the second beam includes at least one of the following: a beam with the quality value being not the largest among the beams that are most recently reported by the terminal; a beam different from the beam that is most recently indicated by the network device; and a beam different from the beam that is most recently reported.

In conjunction with some embodiments of the second aspect, in some embodiments, the first beam set being different from the second beam set includes at least one of the following: at least one beam is different between the first beam set and the second beam set; the second beam set does not include at least one optimal beam in the first beam set; and a third quality value difference is greater than or equal to a third quality value difference threshold, where the third quality value difference is a difference between a quality value of any beam in the second beam set and a quality value of any beam in the first beam set.

In conjunction with some embodiments of the second aspect, in some embodiments, at least one beam group being different between the first beam group set and the second beam group set includes at least one of the following: the changed quality value of a third beam is greater than or equal to a third quality value threshold; and the changed quality value of the third beam is less than or equal to a fourth quality value threshold; where the third beam exists in at least one of the following beam group sets: the first beam group set and the second beam group set, and the third beam is a beam whose quality value has changed.

In conjunction with some embodiments of the second aspect, in some embodiments, the second beam group includes beams from different beam groups, or the second beam group includes beams from the same beam group.

In conjunction with some embodiments of the second aspect, in some embodiments, the first condition is determined by the terminal by acquiring first information, acquiring the first information includes: acquiring first signaling; or acquiring first signaling and second signaling; where the first signaling is used to configure an association between at least one of the following: a first identification, a first condition, a threshold, a difference threshold, a reference signal resource, a reference signal resource set, a measured quantity, a reporting type, and a reporting mode; the second signaling is used to activate the first condition or the first identification configured by the first signaling; the threshold includes at least one of the following: a first quality value threshold, a second quality value threshold, a third quality value threshold, a fourth quality value threshold, a fifth quality value threshold, a sixth quality value threshold, a first quality change value threshold, a first joint quality value threshold, a second joint quality value threshold, and a third joint quality value threshold; the difference threshold includes at least one of the following: a first quality value difference threshold, a second quality value difference threshold, a third quality value difference threshold, and a joint quality value difference threshold.

In conjunction with some embodiments of the second aspect, in some embodiments, the reporting type of the beam report includes at least one of the following: reporting a single beam report; and reporting multiple beam reports, with a time interval between the multiple reports.

In conjunction with some embodiments of the second aspect, in some embodiments, the beam report includes a beam value of at least one of the following: a serving cell, and a cell different from the serving cell.

In conjunction with some embodiments of the second aspect, in some embodiments, the cell different from the serving cell includes a neighboring cell.

In conjunction with some embodiments of the second aspect, in some embodiments, the reporting mode of the beam report includes at least one of the following: reporting based on a non-beam-group form; and reporting based on a beam group form.

In conjunction with some embodiments of the second aspect, in some embodiments, the beam report includes at least one of the following: a quality value of a second beam; an identification of the second beam; quality values of beams included in a second beam set; identifications of beams included in the second beam set; quality values of beams included in a second beam group set; and identifications of beams included in the second beam group set.

In a third aspect, the embodiments of the present disclosure present a communication method, the method including: determining, by a terminal, a first condition; and the first condition being met, reporting a first report to a network device.

In a fourth aspect, the embodiments of the present disclosure present a terminal, including: a processing module configured to determine a first condition; and a transceiver module configured to report a beam report in a case where the first condition is met.

In a fifth aspect, the embodiments of the present disclosure present a network device, including: a transceiver module configured to receive a beam report, where the beam report is reported by a terminal in a case where a first condition is met.

In a sixth aspect, the embodiments of the present disclosure present a terminal including: one or more processors; where the processors are configured to perform the communication method of the first aspect.

In a seventh aspect, the embodiments of the present disclosure present a network device including: one or more processors; where the processors are configured to perform the communication method of the second aspect.

In an eighth aspect, the embodiments of the present disclosure present a communication system, including: a terminal and a network device, where the terminal is configured to implement the communication method of the first aspect, and the network device is configured to implement the communication method of the second aspect.

In a ninth aspect, the embodiments of the present disclosure present a storage medium storing instructions that, when running on a communication device, cause the communication device to perform the communication method according to any of the first and the second aspect.

It is understood that the terminal, network device, communication system, storage medium, program product, computer program, chip, or chip systems are all used to perform the methods proposed in the embodiments of the present disclosure. Therefore, for the beneficial effects that can be achieved by them, reference can be made to the beneficial effects in the corresponding methods.

The embodiments of the present disclosure present a communication method, a terminal, a network device, and a communication system. In some embodiments, the terms "communication method", "information processing method", "beam reporting method", etc., can be used interchangeably; the terms "communication device", "information processing device", "beam reporting device", etc., can be used interchangeably; and the terms "information processing system", "communication system", etc., can be used interchangeably.

The embodiments of the present disclosure are not exhaustive, but are merely illustrative of some embodiments, and are not intended to be a specific limitation on the protection scope of the present disclosure. In the case of no contradiction, each step in a certain embodiment can be implemented as an independent embodiment, and the steps can be arbitrarily combined. For example, a solution obtained from removing some steps from a certain embodiment can also be implemented as an independent embodiment, and the order of the steps in a certain embodiment can be arbitrarily exchanged. In addition, the optional implementations in a certain embodiment can be arbitrarily combined; in addition, the embodiments can be arbitrarily combined. For example, some or all steps of different embodiments can be arbitrarily combined, and a certain embodiment can be arbitrarily combined with the optional implementations of other embodiments.

In the respective embodiments of the present disclosure, unless otherwise specified or provided for by logic, the terms and/or descriptions between the embodiments are consistent and can be referenced by each other. The technical features in different embodiments can be combined to form a new embodiment based on their inherent logical relationships.

The terms used in the embodiments of the present disclosure are only for the purpose of describing specific embodiments and are not intended to limit the present disclosure.

In the embodiments of the present disclosure, unless otherwise specified, elements expressed in the singular form, such as "a", "an", "the", "above", "said", "foregoing", "this", etc., may mean "one and only one", or "one or more", "at least one", etc. For example, when articles such as "a", "an", or "the" in English are used in translation, the noun following the article may be understood as a singular expression form or a plural expression form.

In the embodiments of the present disclosure, "a plurality of" refers to two or more.

In some embodiments, the terms "at least one of", "one or more of", "a plurality of", and "multiple" may be used interchangeably.

In the embodiments of the present disclosure, descriptions such as "at least one of A or B", "A and/or B", "in one case, A, and in another case, B", or "in response to one case, A, and in response to another case, B", can include the following technical solutions depending on the situation: in some embodiments, A (executing A independently of B); in some embodiments, B (executing B independently of A); in some embodiments, selecting from A and B and executing (A and B being selectively executed); and in some embodiments, A and B (executing both A and B). The same applies when there are more branches, such as A, B, C, etc.

In some embodiments, descriptions such as "A or B" may include the following technical solutions depending on the situation: in some embodiments, A (executing A independently of B); in some embodiments, B (executing B independently of A); and in some embodiments, selecting from A and B and executing (A and B being selectively executed). The same applies when there are more branches such as A, B, C, etc.

The prefixes such as "first" and "second" in the embodiments of the present disclosure are merely used to distinguish between different description objects and do not constitute any restriction on the position, order, priority, quantity, or content of the description objects. For the statement of the description object, please refer to the description in the context of the claims or embodiments, and no unnecessary restriction should be constituted due to the use of the prefixes. For example, if the description object is a "field", the ordinal number before the "field" in the "first field" and the "second field" does not limit the position or order between the "fields". "First" and "second" do not limit whether the "fields" modified by them are in the same message or not, nor do they limit the order of the "first field" and the "second field". For another example, if the description object is a "level", the ordinal number before the "level" in the "first level" and the "second level" does not limit the priority between the "levels". For another example, the number of the description objects is not limited by the ordinal number and can be one or more. Taking "first device" as an example, the number of "devices" can be one or more. In addition, the objects modified by different prefixes can be the same or different. For example, if the description object is "device", then the "first device" and the "second device" can be the same device or different devices, and their types can be the same or different; for another example, if the description object is "information", then the "first information" and the "second information" can be the same information or different information, and their contents can be the same or different.

In some embodiments, "including A", "containing A", "for indicating A", and "carrying A" can be interpreted as directly carrying A or indirectly indicating A.

In some embodiments, terms such as "time/frequency "and "time-frequency domain" refer to the time domain and/or frequency domain.

In some embodiments, the terms such as "in response to...", "in response to determining...", "in the case of...", "when...", "if...", "provided ...", etc., can be used interchangeably.

In some embodiments, the terms such as "greater than", "greater than or equal to", "not smaller than", "more than", "more than or equal to", "not less than", "higher than", "higher than or equal to", "not lower than", and "above" can be used interchangeably, and terms such as "smaller than", "smaller than or equal to", "not greater than", "less than", "less than or equal to", "not more than", "lower than", "lower than or equal to", "not higher than", and "below" can be used interchangeably.

In some embodiments, the apparatus can be interpreted as physical or virtual, and their names are not limited to the names described in the embodiments. In some cases, the terms such as "apparatus", "equipment", "device", "circuit", "network element", "node", "function", "unit", "section", "system", "network", "chip", "chip system", "entity", and "subject" can be used interchangeably.

In some embodiments, "network" can be interpreted as apparatuses included in the network, such as an access network device, a core network device, etc.

In some embodiments, the terms "access network device (AN device)", "radio access network device (RAN device)", "base station (BS)", "radio base station", "fixed station", "node", "access point", "transmission point (TP)", "reception point (RP)", "transmission/reception point (TRP)", "panel", "antenna panel", "antenna array", "cell", "macro cell", "small cell", "femto cell", "pico cell", "sector", "cell group", "serving cell", "carrier", "component carrier", and "bandwidth part (BWP)" can be used interchangeably.

In some embodiments, the terms such as "terminal", "terminal device", "user equipment (UE)", "user terminal", "mobile station (MS)", "mobile terminal (MT)", "subscriber station", "mobile unit", "subscriber unit", "wireless unit", "remote unit", "mobile device", "wireless device", "wireless communication device", "remote device", "mobile subscriber station", "access terminal", "mobile terminal", "wireless terminal", "remote terminal", "handset", "user agent", "mobile client", and "client" can be used interchangeably.

In some embodiments, the access network device, core network device, or network device can be replaced by a terminal. For example, the embodiments of the present disclosure can also be applied to structures where communication between the access network device, core network device, or network device and the terminal is replaced by communication between multiple terminals (e.g., device-to-device (D2D), vehicle-to-everything (V2X), etc.). In this case, the structure can also be configured such that the terminal has all or part of the functions of the access network device. Furthermore, the terms such as "uplink" and "downlink" can be replaced with terms corresponding to communication between terminals (e.g., "sidelink"). For example, uplink channel, downlink channel, etc., can be replaced with sidelink channel, and uplink link, downlink, etc., can be replaced with sidelink link.

In some embodiments, the terminal may be replaced by an access network device, a core network device, or a network device. In this case, the structure can also be configured such that the access network device, core network device, or network device has all or some of the functions of the terminal.

In some embodiments, obtaining data, information, etc. may comply with the laws and regulations of the country where the obtaining is performed.

In some embodiments, data, information, etc., may be obtained with the user's consent.

Furthermore, each element, each row, or each column in the table of the embodiments of the present disclosure can be implemented as an independent embodiment, and a combination of any element, any row, or any column can also be implemented as an independent embodiment.

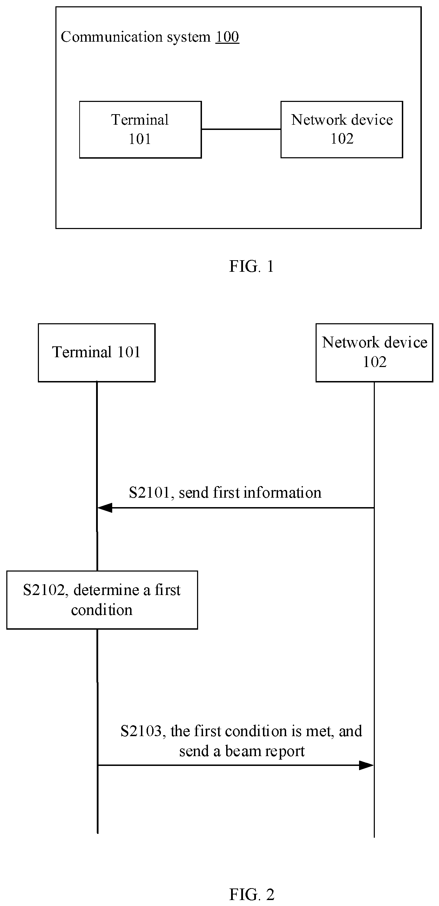

FIG. 1 is a schematic diagram of the architecture of a communication system according to an embodiment of the present disclosure. As shown in FIG. 1, the communication system 100 includes a terminal 101 and a network device 102.

In some embodiments, terminal 101 includes, but is not limited to, at least one of the following: a mobile phone, a wearable device, an Internet of Things device, a car with communication function, a smart car, a tablet computer (Pad), a computer with wireless transceiver function, a virtual reality (VR) terminal device, an augmented reality (AR) terminal device, a wireless terminal device in industrial control, a wireless terminal device in self-driving, a wireless terminal device in remote medical surgery, a wireless terminal device in smart grid, a wireless terminal device in transportation safety, a wireless terminal device in smart city, and a wireless terminal device in smart home.

In some embodiments, the network device 102 may include at least one of an access network device and a core network device.

In some embodiments, the access network device is, for example, a node or device that accesses a terminal to a wireless network. The access network device may include, but is not limited to, at least one of the following: an evolved Node B (eNB) in a 5G communication system, a next-generation evolved Node B (ng-eNB), a next-generation Node B (gNB), a node B (NB), a home node B (HNB), a home evolved node B (HeNB), a wireless backhaul device, a radio network controller (RNC), a base station controller (BSC), a base transceiver station (BTS), a base band unit (BBU), a mobile switching center, a base station in a 6G communication system, an open RAN, a cloud RAN, a base station in other communication systems, and an access node in a Wi-Fi system.

In some embodiments, the technical solutions of the present disclosure can be applied to the Open RAN architecture. In this case, the interfaces between or within access network devices involved in the embodiments of the present disclosure can be changed into internal interfaces of the Open RAN, and the processes and information interactions between these internal interfaces can be implemented through software or programs.

In some embodiments, the access network device may be formed of a central unit (CU) and a distributed unit (DU), where the CU may also be referred to as a control unit. The CU-DU structure may be used to separate the protocol layers of the access network device, with some functions of the protocol layers being placed in and centrally controlled by the CU and some or all of the remaining functions of the protocol layers being distributed in the DUs and the DUs are centrally controlled by the CU, but it is not limited thereto.

In some embodiments, the core network device may be a single device including one or more network elements, or it may be multiple devices or a group of devices, each including all or part of the aforementioned one or more network elements. The network elements may be virtual or physical. The core network may include, for example, at least one of an Evolved Packet Core (EPC), a 5G Core Network (5GCN), or a Next Generation Core (NGC).

It can be understood that the communication system in the embodiments of the present disclosure is described for the purpose of more clearly illustrating the technical solutions of the embodiments of the present disclosure, and does not constitute a limitation on the technical solutions proposed in the embodiments of the present disclosure. As those skilled in the art would know, with the evolution of system architecture and the emergence of new business scenarios, the technical solutions proposed in the embodiments of the present disclosure are also applicable to similar technical problems.

The embodiments of the present disclosure described below can be applied to the communication system 100 shown in FIG. 1, or to some of the subjects, but are not limited thereto. The subjects shown in FIG. 1 are illustrative. The communication system may include all or some of the subjects in FIG. 1, or it may include subjects other than those of FIG. 1. The number and configuration of the subjects are arbitrary, the subjects may be physical or virtual, and the connection relationship between the subjects is illustrative. The subjects may not be connected or may be connected, and the connection can be in any way, which may be a direct connection or an indirect connection, a wired connection or a wireless connection.

The embodiments of the present disclosure can be applied to Long Term Evolution (LTE), LTE-Advanced (LTE-A), LTE-Beyond (LTE-B), SUPER 3G, IMT-Advanced, 4th generation mobile communication system (4G), 5th generation mobile communication system (5G), 5G new radio (NR), Future Radio Access (FRA), New-Radio Access Technology (RAT), New Radio (NR), New radio access (NX), Future generation radio access (FX), Global System for Mobile communications (GSM), CDMA2000, Ultra Mobile Broadband (UMB), IEEE 802.11 (Wi-Fi (registered trademark)), IEEE 802.16 (WiMAX (registered trademark)), IEEE 802.20, Ultra-Wideband (UWB), Bluetooth (registered trademark), Public Land Mobile Network (PLMN) networks, Device-to-Device (D2D) systems, Machine-to-Machine (M2M) systems, Internet of Things (IoT) systems, Vehicle-to-Everything (V2X) systems, systems utilizing other communication methods, next-generation systems extended based upon them, etc. Furthermore, a combination of multiple systems (e.g., a combination of LTE or LTE-A with 5G) can be applied.

In NR, especially in the operating frequency range 2, high-frequency channels attenuate quickly, and thus beam-based transmission and reception is required to perform communication in order to ensure coverage.

In some embodiments, the communication is performed based on the beam measurement report that is periodically, semi-persistently, or non-periodically reported through configuration by the base station.

However, configuring a period length of a reporting period by the base station or configuring timing of aperiodic reporting by the base station is not optimal for handling changes in beam quality. For example, taking the period length as an example, if the period length is configured to be too short, the optimal K (K is an integer greater than or equal to 1) beams reported in two reports may be the same beams, resulting in wasted signaling overhead. If the period length is configured to be too long, there is a possibility that the beam has changed but it cannot be reported because the reporting time has not reached, thus affecting the communication quality.

On this basis, the embodiments of the present disclosure propose a communication method that enables the terminal to perform reporting based on triggering conditions when performing beam reporting, thereby avoiding the problem of wasted signaling overhead due to frequent beam reporting, and avoiding the problem of communication quality being affected due to untimely beam reporting.

FIG. 2 is schematic interactive diagram illustrating a communication method according to an embodiment of the present disclosure. As shown in FIG. 2, the embodiment of the present disclosure relates to a communication method, which includes:
**in step S2101**, a network device 102 sends first information to a terminal 101.

In some embodiments, the terminal 101 obtains the first information sent by the network device 102.

In some embodiments, the first information includes at least one of the following: a first signaling, and a second signaling.

In some embodiments, the terminal 101 obtains the first signaling and the second signaling based on the first information.

In some embodiments, the first information is used to indicate a first condition.

Optionally, the first information can be indication information.

In some embodiments, the first signaling is used to configure association between at least one of the following: a first identification, a first condition, a threshold, a difference threshold, a reference signal resource, a reference signal resource set, a measured quantity, a reporting type, and a reporting mode.

Optionally, the first signaling is Radio Resource Control (RRC) signaling.

Optionally, the first identification is at least one of the following:
an identification of the association, a measurement ID or a report ID.

In some embodiments, the second signaling is used to activate or indicate the first condition configured by the first signaling or the first identification (ID).

Optionally, the second signaling is a Medium Access Control Element (MAC CE) or Downlink Control Information (DCI).

In some embodiments, the first information includes at least one of the following: RRC signaling, MAC CE, or DCI.

For example, the first signaling is used to configure the association between at least one of the following:
an association between the first condition and the first identification;
an association between the first condition and the threshold;
an association between the first condition and the reference signal resource;
an association between the first condition and the reference signal resource set;
an association between the first condition and the measured quantity;
an association between the first condition and the reporting type;
an association between the first condition and the reporting mode;
an association between the first identification and the threshold;
an association between the first identification and the reference signal resource;
an association between the first identification and the reference signal resource set;
an association between the first identification and the measured quantity;
an association between the first identification and the reporting type; and
an association between the first identification and the reporting mode.

In some embodiments, the reference signal resource may be at least one of the following:
a periodic reference signal resource, an aperiodic reference signal resource, and a semi-persistent reference signal resource.

In some embodiments, the reference signal resource may be at least one of the following:
a Synchronization Signal and PBCH block (SSB), and a Channel State Information Reference Signal (CSI-RS).

In some embodiments, the reference signal resource set may be at least one of the following:
a set of periodic reference signal resources, a set of aperiodic reference signal resources, and a set of semi-persistent reference signal resources.

In some embodiments, the measured quantity includes at least one of the following:

Layer 1 reference signal received power (L1-RSRP) and Layer 1 signal to interference plus noise ratio (L1-SINR).

In some embodiments, the reporting type includes at least one of the following:
reporting one beam report, or reporting multiple beam reports.

In some embodiments, multiple beam reports are reported, and there are time intervals between the multiple beam reports, for example, a period in periodic reporting, i.e., a time interval.

In some embodiments, the reporting mode includes at least one of the following: non-beam-group-based reporting, and beam-group-based reporting (group based beam report).

In some embodiments, the non-beam-group-based reporting includes: beam based reporting.

In some embodiments, the beam-group-based reporting includes the following two:
- A) in the case of reporting based on the beam group, the terminal reports two beam groups, indicating that one beam is selected from each of the reported beam groups, and the two beams formed are two beams for which the terminal supports simultaneous transmission and/or reception; and
- B) in the case of reporting based on the beam group, the terminal reports at least one beam group, and two beams included in each beam group are the two beams for which the terminal supports simultaneous transmission and/or reception.

In some embodiments, the reported beams include at least one of the following: two beams for which the terminal supports simultaneous uplink transmission, and two beams for which the terminal supports simultaneous downlink reception.

For example, in the case of beam-group-based reporting, the reported beams include at least one of the following: two beams for which the terminal supports simultaneous uplink transmission, and two beams for which the terminal supports simultaneous downlink reception.

In some embodiments, the reported content includes at least one of the following: reference signal resource ID, Synchronization Signal and PBCH block (SSB) ID, and Channel State Information Reference Signal (CSI-RS) ID for the beam. That is, the beam is indicated through the reference signal resource ID, SSB ID, and CSI-RS ID.

In some embodiments, the names of information, etc., are not limited to the names described in the embodiments. The terms such as "information ", "message", "signal", "signaling", "report", "configuration", "indication", "instruction", "command", "channel", "parameter", "domain", "field", "symbol", "symbol", "codebook", "codeword", "codepoint", "bit", "data", "program", and "chip" can be used interchangeably.

In some embodiments, "acquiring", "obtaining", "getting", "receiving", "transmitting", "bidirectional transmission", and "sending and/or receiving" can be used interchangeably and can be interpreted as receiving from other entities, obtaining from protocols, obtaining from higher layers, obtaining through self-processing, or autonomous implementation, among other meanings.

In some embodiments, the terms such as "sending", "transmitting", "reporting", "distributing", "transmission", "bidirectional transmission", "sending and/or receiving" can be used interchangeably.

**In Step S2102,** the terminal 101 determines the first condition.

In some embodiments, the terminal 101 determines the first condition based on the first information sent by the network device 102.

In some embodiments, the terminal 101 determines the first condition based on a default condition specified in a protocol.

In some embodiments, in the case where the terminal 101 determines the first condition based on the default condition specified in the protocol, the terminal 101 does not need to determine the first condition based on the first information sent by the network device 102.

**In step S2103**, the terminal 101 meets the first condition, and sends a beam report to the network device 102.

In some embodiments, the network device 102 receives the beam report sent by terminal 101 in the case where the first condition is met.

In some embodiments, the first condition being met includes at least one of the following:
a quality value of a first beam is less than or equal to a first quality value threshold;
a quality change value of the first beam is greater than or equal to a first quality change value threshold;
a quality value of a second beam is greater than or equal to a second quality value;
a first quality value difference is greater than or equal to a first quality value difference threshold;
a first beam set is different from a second beam set;
at least one beam group is different between a first beam group set and a second beam group set;
a candidate beam exists in the second beam group set, and a quality value of the candidate beam is greater than or equal to a fifth quality value threshold;
a quality value of a beam in the first beam group set is less than or equal to a sixth quality value threshold;
a candidate beam exists in the second beam group set, and a quality value of the candidate beam is greater than or equal to a quality value of a beam in the first beam group set;
a joint quality value of beams in a second beam group is greater than or equal to a first joint quality value threshold, where the second beam group includes beams for which the terminal supports at least one of the following: simultaneous transmission and simultaneous reception;
a joint quality value of a first beam group is less than or equal to a third joint quality value threshold;
a joint quality difference between the joint quality value of the second beam group and the joint quality value of the first beam group is greater than or equal to a joint quality difference threshold; and
a second quality value difference is greater than or equal to a second quality value difference threshold.

In some embodiments, the first beam includes at least one of the following: a beam with the highest quality value among beams that are most recently reported by the terminal; a beam that is most recently indicated by the network device; all beams that are most recently reported by the terminal; and a beam with the lowest quality value among the beams that are most recently reported by the terminal.

In some embodiments, the first beam is the current beam.

In some embodiments, the current beam includes at least one of the following: the best beam in the last report, a beam that is recently indicated by the network device, all beams in the last report, and the worst beam in the last report.

For example, the best beam in the last report is a beam with the highest quality value among the beams that are most recently reported by the terminal. The beam that is recently indicated by the network device is the beam that is most recently indicated by the network device, which can be indicated by the network device through a Transmission Configuration Indicator (TCI) state or spatial relationship information, where a reference signal resource ID corresponding to a Type D in quasi-co-location (QCL) in the TCI state is used to indicate the beam. All the beams in the last report are beams that are most recently reported by the terminal. The worst beam in the last report is the beam with the lowest quality value among the beams that are most recently reported by the terminal.

In some embodiments, the quality value of the first beam is determined based on at least one of the following: L1-RSRP or L1-SINR.

It should be understood that, to avoid repeated description, the beam quality value in the following embodiments can be determined by at least one of L1-RSRP or L1-SINR corresponding to the beam.

In some embodiments, the quality change value of the first beam includes at least one of the following: the quality change value of the first beam within a specified time period, or the quality change value of the first beam in two adjacent reports.

In some embodiments, the second beam includes at least one of the following: a beam with a quality value being not the largest among the beams most recently reported by the terminal; a beam different from the beam most recently indicated by the network device; and a beam different from the beam that is most recently reported.

In some embodiments, the second beam is a candidate beam.

In some embodiments, the candidate beam includes at least one of the following: a non-optimal beam in the last report, a beam other than the beam included in the last report, or a beam other than the beam recently indicated by the network device.

For example, the non-optimal beam in the last report is the beam with a quality value being not the largest among the beams most recently reported by the terminal. The beam other than those included in the last report. The beam other than the beam most recently indicated by the network device is a beam different from the beam most recently indicated by the network device.

In some embodiments, the first quality value difference is a difference between the quality value of the second beam and the quality value of the first beam.

In some embodiments, the first beam set includes K beams with the best quality values that are most recently reported, where K is an integer greater than or equal to 1.

In some embodiments, the second beam set includes L beams with the best quality values that are currently acquired, where L is an integer greater than or equal to 1.

In some embodiments, the first beam set being different from the second beam set includes at least one of the following: at least one beam is different between the first beam set and the second beam set; the second beam set does not include at least one best beam in the first beam set; and a third quality value difference is greater than or equal to a third quality value difference threshold, where the third quality value difference is a difference between the quality value of any beam in the second beam set and the quality value of any beam in the first beam set.

In some embodiments, the first beam set being different from the second beam set includes at least one of the following:
in a case where at least one beam is the same between the first beam set and the second beam set, there is at least one beam different between the first beam set and the second beam set;
the beams in the first beam set are completely different from the beams in the second beam set; and the third quality value difference is greater than or equal to the third quality value difference threshold.

In some embodiments, the third quality value difference is the difference between the quality value of any beam in the second beam set and the quality value of any beam in the first beam set.

For example, the third quality value can be a difference between the quality value of the beam with the best quality in the second beam set and the quality value of the beam with the best quality in the first beam set.

For example, the third quality value can be a difference between the quality value of the beam with the worst quality in the second beam set and the quality value of the beam with the worst quality in the first beam set.

In some embodiments, the first beam set and the second beam set meet the first condition under at least one of the following:
the second beam set does not include at least one best beam in the first beam set;
the second beam set does not include the beam that is most recently indicated by the network device; and
the third quality value difference is greater than or equal to the third quality value difference threshold.

In some embodiments, the first beam group set includes M first beam groups that are most recently reported, where M is an integer greater than or equal to 1.

In some embodiments, the second beam group set includes N second beam groups that are currently acquired, where N is an integer greater than or equal to 1.

In some embodiments, the first beam group includes beams for which the terminal supports at least one of the following: simultaneous transmission and simultaneous reception.

In some embodiments, the second beam group includes beams for which the terminal supports at least one of the following: simultaneous transmission and simultaneous reception.

In some embodiments, the second quality value difference is an amount of change in a beam quality value of a specified beam in the first beam group.

Optionally, the specified beam in the first beam group is a beam whose beam quality changes in the first beam group.

In some embodiments, at least one beam group being different between the first beam group set and the second beam group set includes at least one of the following:
the changed quality value of a third beam is greater than or equal to a third quality value threshold; and
the changed quality value of the third beam is less than or equal to a fourth quality value threshold;
where the third beam exists in at least one of the following beam group sets: the first beam group set and the second beam group set, and the third beam is a beam whose quality value has changed.

For example, the first beam group set is a beam group set that is most recently reported, the second beam group set is a beam group set that is currently reported, and in the case where the first beam group set and the second beam group set are the same, the beam groups in the first beam group set are the same as the corresponding beam groups in the second beam group set (e.g., the beam quality in the beam groups is the same). In the case where there is a third beam in the second beam group set, the third beam changes and the changed quality value of the third beam is greater than or equal to a third quality value, the beam group in which the third beam is included is different from the corresponding beam group in the first set.

For example, the first beam group set is a beam group set that is most recently reported, the second beam group set is a beam group set that is currently reported, and in the case where the first beam group set and the second beam group set are the same, the beam groups in the first beam group set are the same as the corresponding beam groups in the second beam group set (e.g., the beam quality in the beam groups is the same). In the case where there is a third beam in the second beam group set, the third beam changes and the changed quality value of the third beam is less than or equal to a fourth quality value, the beam group in which the third beam is included is different from the corresponding beam group in the first set.

In some embodiments, the first beam group set and the second beam group set meet the first condition under at least one of the following:
at least one beam group is different betweem the first beam group set and the second beam group set;
a second quality value difference is greater than or equal to a second quality value difference threshold;
the changed quality value of the third beam is greater than or equal to a third quality value threshold, for example, in the case where the third beam is a beam in the second beam group set, the changed quality value of the third beam is greater than the third quality value threshold;
the changed quality value of the third beam is less than or equal to a fourth quality value threshold, for example, in the case where the third beam is a beam in the first beam group set, the changed quality value of the third beam is less than or equal to the fourth quality value threshold;
a candidate beam exists in the second beam group set, and the quality value of the candidate beam is greater than or equal to a fifth quality value threshold;
a candidate beam exists in the second beam group set, and the quality value of the candidate beam is greater than or equal to the quality value of the beam in the first beam group set;
the quality value of a beam in the first beam group set is less than or equal to a sixth quality value threshold;
a candidate beam exists in the second beam group set, and the quality value of the candidate beam is greater than the quality value of a beam in the first beam group set;
a joint quality value of beams in the second beam group is greater than a first joint quality value threshold;
a joint quality value of the first beam group is less than or equal to a third joint quality value threshold; and
a joint quality difference between the joint quality value of the second beam group and the joint quality value of the first beam group is greater than or equal to a joint quality difference threshold.

In some embodiments, the second beam group includes beams from different beam groups, or the second beam group includes beams from the same beam group.

In some embodiments, the beam report may be reported based on at least one of the following: based on predictions from an artificial intelligence (AI) model, or based on all measurements.

In some embodiments, the joint quality value is determined based on multiple beams.

For example, the joint quality value is a signal to noise ratio (SNR) of a physical downlink control channel (PDCCH) obtained based on the multiple beams.

In some embodiments, the third beam is a beam present in the first beam group set or the second beam group set, and the quality value of the third beam may change.

In some embodiments, at least one of the following can belong to the threshold: the first quality value threshold, the second quality value threshold, the third quality value threshold, the fourth quality value threshold, the fifth quality value threshold, the sixth quality value threshold, the first quality change value threshold, the first joint quality value threshold, the second joint quality value threshold, and the third joint quality value threshold.

In some embodiments, at least one of the following can belong to the difference threshold: the first quality value difference threshold, the second quality value difference threshold, the third quality value difference threshold, and the joint quality difference threshold.

In some embodiments, for the configuration examples of the threshold and the difference threshold, reference can be made to the relevant embodiments of step S2101 above, which will not be repeated here.

In some embodiments, the beam report includes the beam value of at least one of the following: a serving cell, and a cell other than the serving cell.

Optionally, the cell other than the serving cell is a neighboring cell or the like.

In some embodiments, the beam report includes at least one of the following: a quality value of a second beam, an identification of the second beam, a quality value of a beam included in the second beam set, an identification of a beam included in the second beam set, a quality value of a beam included in the second beam group set, and an identification of a beam included in the second beam group set.

In some embodiments, the terms such as "beam report", "uplink beam report", "beam communication report", "beam report", and "uplink report" can be used interchangeably.

In some embodiments, the terms such as "up", "uplink", and "physical uplink" can be used interchangeably, the terms such as "down", "downlink", and "physical downlink" can be used interchangeably, and the terms such as "side", " sidelink", "side communication", "sidelink communication", "direct", " direct link", "direct communication", and "direct link communication" can be used interchangeably.

In some embodiments, the terms such as "radio", "wireless", "radio access network (RAN)", "access network (AN)", and "RAN-based" can be used interchangeably.

In some embodiments, the terms such as "synchronization signal (SS)", "synchronization signal block (SSB)", "reference signal (RS)", "pilot", and "pilot signal" can be used interchangeably.

In some embodiments, terms such as "timing", "time point", "time", and "temporal position" can be used interchangeably, and the terms such as "duration", "time period", "time window", "window", and "time" can be used interchangeably.

In some embodiments, the terms such as "resource block (RB)", "physical resource block (PRB)", "sub-carrier group (SCG)", "resource element group (REG)", "PRB pair", "RB pair", "resource element (RE)", and "sub-carrier" can be used interchangeably.

In some embodiments, terms such as "certain", "preseted", "preset", "set", "indicated", "a certain", "any", and "first" can be used interchangeably, and "certain A", "preseted A", "preset A", "set A", "indicated A", "a certain A", "any A", and "first A" can be interpreted as the A pre-defined in a protocol or the like, or the A obtained through setting, configuration, or indication, or a specific A, a certain A, any A, or first A, but are not limited thereto.

The communication method involved in the embodiments of the present disclosure can include at least one of steps S2101 to S2103. For example, step S2103 can be implemented as an independent embodiment, step S2101 can be implemented as an independent embodiment, and steps S2101+S2102+S2103 can be implemented as an independent embodiment, but it is not limited thereto.

In some embodiments, steps S2101 and S2102 can be performed in an exchanged order or simultaneously, and steps S2102 and S2103 can be performed in an exchanged order or simultaneously.

In some embodiments, steps S2101 and S2103 are optional, and one or more of these steps may be omitted or substituted in different embodiments.

In some embodiments, steps S2102 and S2103 are optional, and one or more of these steps may be omitted or substituted in different embodiments.

In some embodiments, steps S2101 and S2102 are optional, and one or more of these steps may be omitted or substituted in different embodiments.

In some embodiments, reference can be made to other optional implementations described before or after the description corresponding to FIG. 2.

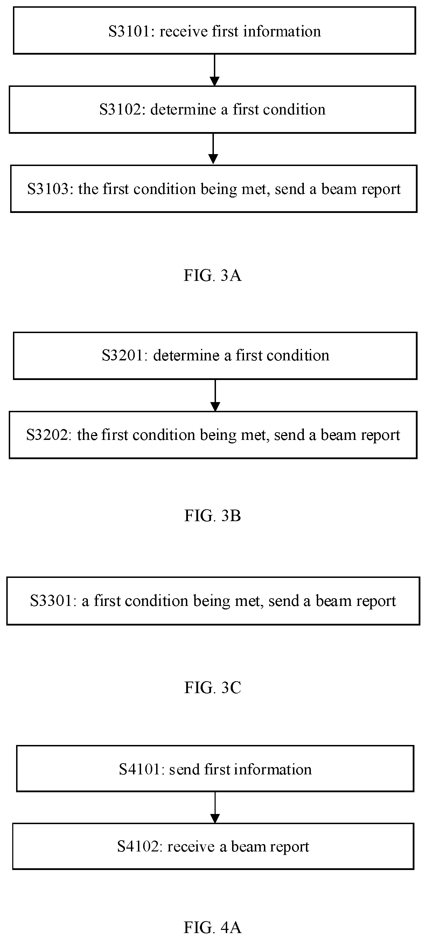

In some embodiments, FIG. 3A is a schematic flowchart illustrating a communication method according to an embodiment of the present disclosure. As shown in FIG. 3A, the embodiment of the present disclosure relates to a communication method, which includes:
**in step S3101**, receiving first information.

In some embodiments, the terminal 101 receives the first information sent by the network device 102, but it is not limited thereto; the terminal 101 may also receive the first information sent by other entities.

In some embodiments, the terminal 101 obtains the first information specified by the protocol.

In some embodiments, the terminal 101 obtains the first information from the upper layer.

In some embodiments, the terminal 101 obtains the first information by processing.

In some embodiments, step S3101 is omitted, and the terminal 101 autonomously implements the function indicated by the first information, or the above function is a default or default setting.

For optional implementations of step S3101, reference can be made to the optional implementations of step S2101 in FIG. 2 and other related parts in the embodiments involved in FIG. 2, which will not be repeated here.

**In step S3102**, determining a first condition.

For optional implementations of step S3102, reference can be made to the optional implementations of step S2102 in FIG. 2 and other related parts in the embodiments involved in FIG. 2, which will not be repeated here.

**In step S3103**, the first condition being met, sending a beam report.

For optional implementations of step S3103, reference can be made to the optional implementations of step S2103 in FIG. 2 and other related parts in the embodiments involved in FIG. 2, which will not be repeated here.

The communication method involved in the embodiments of the present disclosure can include at least one of steps S3101 to S3103. For example, step S3101 can be implemented as an independent embodiment, step S3102 can be implemented as an independent embodiment, step S3103 can be implemented as an independent embodiment, step S3101+S3102 can be implemented as an independent embodiment, step S3101+S3103 can be implemented as an independent embodiment, step S3101+S3103 can be implemented as an independent embodiment, and step S3101+S3102+S3103 can be implemented as an independent embodiment, but it is not limited thereto.

In some embodiments, steps S3102 and S3103 may be performed in an exchanged order or simultaneously. Steps S3101 and S3103 may be performed in an exchanged order or simultaneously.

In some embodiments, steps S3101 and S3103 are optional, and one or more of these steps may be omitted or substituted in different embodiments.

In some embodiments, steps S3102 and S3103 are optional, and one or more of these steps may be omitted or substituted in different embodiments.

FIG. 3B is a schematic flowchart illustrating a communication method according to an embodiment of the present disclosure. As shown in FIG. 3B, the embodiment of the present disclosure relates to a communication method, which includes:
**in step S3201**, determining a first condition.

For optional implementations of step S3201, reference can be made to the optional implementations of steps S2101 and S2102 in FIG. 2, steps S3101 and S3102 in FIG. 3A, and other related parts in the embodiments involved in FIG. 2 and FIG. 3A, which will not be repeated here.

**In step S3202**, the first condition being met, sending a beam report.

For optional implementations of step S3202, reference can be made to the optional implementations of step S2103 in FIG. 2 and step S3103 in FIG. 3A, as well as other related parts in the embodiments involved in FIGS. 2 and 3A, which will not be repeated here.

The communication method involved in the embodiments of the present disclosure can include at least one of steps S3201 to S3202. For example, step S3201 can be implemented as an independent embodiment, and step S3202 can be implemented as an independent embodiment, but it is not limited thereto.

In some embodiments, step S3201 is optional, and one or more of these steps may be omitted or substituted in different embodiments.

In the embodiments of the present disclosure, step S3201 can be combined with steps S3102-S3103 of FIG. 3A, and step S3202 can be combined with steps S3101, S3102, and S3103 of FIG. 3A.

FIG. 3C is a schematic flowchart illustrating a communication method according to an embodiment of the present disclosure. As shown in FIG. 3C, the embodiment of the present disclosure relates to a communication method, which includes:
**in step S3301**, a first condition being met, sending a beam report.

For optional implementations of step S3301, reference can be made to the optional implementations of step S2103 in FIG. 2, step S3103 in FIG. 3A, step S3202 in FIG. 3B, and other related parts in the embodiments involved in FIGS. 2, 3A, and 3B, which will not be repeated here.

In some embodiments, the first condition being met includes at least one of the following:
a quality value of a first beam is less than or equal to a first quality value threshold, where the first beam is the current beam;
a quality change value of the first beam is greater than or equal to a first quality change value threshold;
a quality value of a second beam is greater than or equal to a second quality value threshold, where the second beam is a candidate beam;
a first quality value difference is greater than or equal to a first quality value difference threshold, where the first quality value difference is a difference between the quality value of the second beam and the quality value of the first beam;
a first beam set is different from a second beam set, where the first beam set includes K beams with the best quality values that are reported most recently, and the second beam set includes L beams with the best quality values that are currently acquired, K being an integer greater than or equal to 1, and L being an integer greater than or equal to 1;
the second beam set does not include the beam that is most recently indicated by the network device;
at least one beam group is different between a first beam group set and a second beam group set, where the first beam group set includes M first beam groups that are most recently reported, the second beam group set includes N second beam groups that are currently acquired, and each of the groups includes a beam for which the terminal supports at least one of the following: simultaneous transmission and simultaneous reception;
a candidate beam exists in the second beam group set, and the quality value of the candidate beam is greater than or equal to a fifth quality value threshold;
a quality value of a beam in the first beam group set is less than or equal to a sixth quality value threshold;
a candidate beam exists in the second beam group set, and the quality value of the candidate beam is greater than or equal to the quality value of the beam in the first beam group set;
a joint quality value of beams in a second beam group is greater than or equal to a first joint quality value threshold, where the second beam group includes beams for which the terminal supports at least one of the following: simultaneous transmission and simultaneous reception;
a joint quality value of a first beam group is less than or equal to a third joint quality value threshold;
a joint quality difference between the joint quality value of the second beam group and the joint quality value of the first beam group is greater than or equal to a joint quality difference threshold; and
a second quality value difference is greater than or equal to a second quality value difference threshold, where the second quality difference is an amount of change in the quality value of a beam in the first beam group of which the quality value changes.

In some embodiments, the first beam includes at least one of the following:
a beam with the largest quality value among the beams that are most recently reported by the terminal;
a beam that is most recently indicated by the network device;
all beams that are most recently reported by the terminal; and
a beam with the lowest quality value among the beams that are most recently reported by the terminal.

In some embodiments, the second beam includes at least one of the following:
a beam with the quality value being not the largest among the beams that are most recently reported by the terminal;
a beam different from the beam that is most recently indicated by the network device;
a beam different from the beam that is most recently reported.

In some embodiments, the first beam set being different from the second beam set includes at least one of the following:
at least one beam is different between the first beam set and the second beam set;
the second beam set does not include at least one best beam in the first beam set; and
a third quality value difference is greater than or equal to a third quality value difference threshold, where the third quality value difference is a difference between the quality value of any beam in the second beam set and the quality value of any beam in the first beam set.

In some embodiments, at least one beam group being different between the first beam group set and the second beam group set includes at least one of the following:
a changed quality value of a third beam is greater than or equal to a third quality value threshold; and
the changed quality value of the third beam is less than or equal to a fourth quality value threshold;
where the third beam exists in at least one of the following beam group sets: the first beam group set and the second beam group set, and the third beam is a beam whose quality value has changed.

In some embodiments, the second beam group includes beams from different beam groups, or the second beam group includes beams from the same beam group.

In some embodiments, determining the first condition includes obtaining first information, and obtaining the first information includes:
obtaining first signaling; or
obtaining first signaling and second signaling;
where the first signaling is used to configure an association between at least one of the following: a first identification, a first condition, a threshold, a difference threshold, a reference signal resource, a reference signal resource set, a measured quantity, a reporting type, and a reporting mode;
the second signaling is used to activate the first condition configured by the first signaling or the first identification;
the threshold include at least one of the following: a first quality value threshold, a second quality value threshold, a third quality value threshold, a fourth quality value threshold, a fifth quality value threshold, a sixth quality value threshold, a first quality change value threshold, a first joint quality value threshold, a second joint quality value threshold, and a third joint quality value threshold;
the difference threshold includes at least one of the following: a first quality value difference threshold, a second quality value difference threshold, a third quality value difference threshold, and a joint quality difference threshold.

In some embodiments, the reporting type of the beam report includes at least one of the following: reporting a single beam report; or reporting multiple beam reports with time intervals between the multiple reports.

In some embodiments, the beam report includes a beam value of at least one of the following: a serving cell, and a cell different from the serving cell.

In some embodiments, the cell different from the serving cell includes a neighboring cell.

In some embodiments, the reporting mode of the beam report includes at least one of the following: reporting based on a non-beam-group form; and reporting based on a beam group form.

In some embodiments, the beam report includes at least one of the following: a quality value of a second beam; an identification of the second beam; a quality value of a beam included in a second beam set; an identification of the beam included in the second beam set; a quality value of a beam included in a second beam group set; and an identification of the beam included in the second beam group set.

In the embodiments of the present disclosure, step S3301 can be combined with steps S3102-S3103 of FIG. 3A, and step S3301 can be combined with step S3202 of FIG. 3B.

FIG. 4A is a schematic flowchart illustrating a communication method according to an embodiment of the present disclosure. As shown in FIG. 4A, the embodiment of the present disclosure relates to a communication method, which includes:
**in step S4101**, sending first information.

**In step S4102**, receiving a beam report.

For optional implementations of step S4101, reference can be made to the optional implementations of step S2102 in FIG. 2, and other related parts in the embodiments involved in FIG. 2, which will not be repeated here.

For optional implementations of step S4102, reference can be made to the optional implementations of step S2103 in FIG. 2, as well as other related parts in the embodiments involved in FIG. 2, which will not be repeated here.

The communication method involved in the embodiments of the present disclosure can include at least one of steps S4101 to S4102. For example, step S4101 can be implemented as an independent embodiment, and step S4102 can be implemented as an independent embodiment, but it is not limited thereto.

In some embodiments, step S4101 is optional, and one or more of these steps may be omitted or substituted in different embodiments.

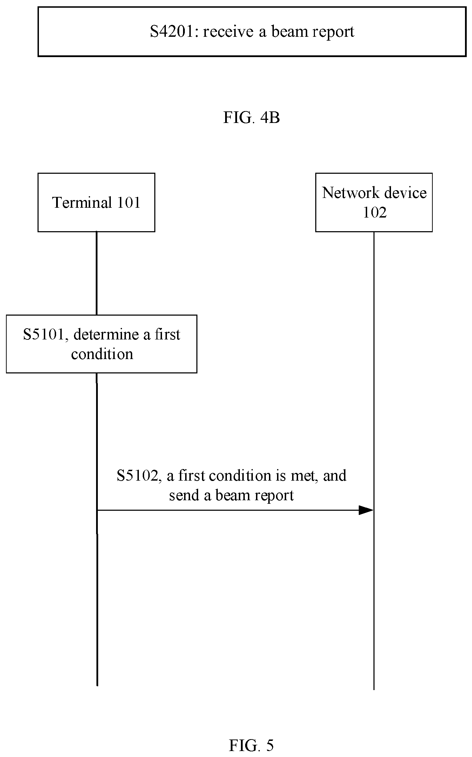

FIG. 4B is a schematic flowchart illustrating a communication method according to an embodiment of the present disclosure. As shown in FIG. 4B, the embodiment of the present disclosure relates to a communication method, which includes:
**in step S4201**, receiving a beam report.

For optional implementations of step S4201, reference can be made to the optional implementation of step S2103 in FIG. 2, and other related parts in the embodiments involved in FIG. 2, which will not be repeated here.

In some embodiments, the network device 102 obtains a first report sent from the terminal 101, but it is not limited thereto; or the network device 102 may obtain the first report from other entities.

In some embodiments, the beam report is reported by the terminal in a case where a first condition is met, and the first condition is determined based on first information determined by the terminal.

In some embodiments, the first condition being met includes at least one of the following:
a quality value of a first beam is less than or equal to a first quality value threshold, where the first beam is the current beam;
a quality change value of the first beam is greater than or equal to a first quality change value threshold;
a quality value of a second beam is greater than or equal to a second quality value threshold, where the second beam is a candidate beam;
a first quality value difference is greater than or equal to a first quality value difference threshold, where the first quality value difference is a difference between the quality value of the second beam and the quality value of the first beam;
a first beam set is different from a second beam set, where the first beam set includes K beams with the best quality values that are reported most recently, and the second beam set includes L beams with the best quality values that are currently acquired, K being an integer greater than or equal to 1, and L being an integer greater than or equal to 1;
the second beam set does not include a beam that is most recently indicated by the network device;
at least one beam group is different between a first beam group set and a second beam group set, where the first beam group set includes M first beam groups that are most recently reported, the second beam group set includes N second beam groups that are currently acquired, and each of the beam groups includes a beam for which the terminal supports at least one of the following: simultaneous transmission and simultaneous reception;
a candidate beam exists in the second beam group set, and the quality value of the candidate beam is greater than or equal to a fifth quality value threshold;
a quality value of a beam in the first beam group set is less than or equal to a sixth quality value threshold;
a candidate beam exists in the second beam group set, and the quality value of the candidate beam is greater than or equal to the quality value of the beam in the first beam group set;
a joint quality value of beams in a second beam group is greater than or equal to a first joint quality value threshold, where the second beam group includes beams for which the terminal supports at least one of the following: simultaneous transmission and simultaneous reception;
a joint quality value of a first beam group is less than or equal to a third joint quality value threshold;
a joint quality difference between the joint quality value of the second beam group and the joint quality value of the first beam group is greater than or equal to a joint quality difference threshold; and
a second quality value difference is greater than or equal to a second quality value difference threshold, where the second quality difference is an amount of change in the quality value of a beam in the first beam group of which the quality value changes.

In some embodiments, the first beam includes at least one of the following: a beam with the highest quality value among beams that are most recently reported by the terminal; a beam that is most recently indicated by the network device; all beams that are most recently reported by the terminal; and a beam with the lowest quality value among the beams that are most recently reported by the terminal.

In some embodiments, the second beam includes at least one of the following: a beam with the quality value being not the largest among beams that are most recently reported by the terminal; a beam different from the beam that is most recently indicated by the network device; and a beam different from the beams that are most recently reported.

In some embodiments, the first beam set being different from the second beam set includes at least one of the following: at least one beam is different between the first beam set and the second beam set; the second beam set does not include at least one optimal beam in the first beam set; and a third quality value difference is greater than or equal to a third quality value difference threshold, where the third quality value difference is a difference between a quality value of any beam in the second beam set and a quality value of any beam in the first beam set.

In some embodiments, at least one beam group being different between the first beam group set and the second beam group set includes at least one of the following: the changed quality value of a third beam is greater than or equal to a third quality value threshold; and the changed quality value of the third beam is less than or equal to a fourth quality value threshold; where the third beam exists in at least one of the following beam group sets: the first beam group set and the second beam group set, and the third beam is a beam whose quality value has changed.

In some embodiments, the second beam group includes beams from different beam groups, or the second beam group includes beams from the same beam group.

In some embodiments, the first condition is determined by the terminal by acquiring first information, acquiring the first information includes: acquiring first signaling; or acquiring first signaling and second signaling; where the first signaling is used to configure an association between at least one of the following: a first identification, a first condition, a threshold, a difference threshold, a reference signal resource, a reference signal resource set, a measured quantity, a reporting type, and a reporting mode; the second signaling is used to activate the first condition or the first identification configured by the first signaling; the threshold includes at least one of the following: a first quality value threshold, a second quality value threshold, a third quality value threshold, a fourth quality value threshold, a fifth quality value threshold, a sixth quality value threshold, a first quality change value threshold, a first joint quality value threshold, a second joint quality value threshold, and a third joint quality value threshold; the difference threshold includes at least one of the following: a first quality value difference threshold, a second quality value difference threshold, a third quality value difference threshold, and a joint quality value difference threshold.

In some embodiments, the reporting type of the beam report includes at least one of the following: reporting a single beam report; and reporting multiple beam reports, with a time interval between the multiple reports.

In some embodiments, the beam report includes a beam value of at least one of the following: a serving cell, and a cell different from the serving cell.

In some embodiments, the cell different from the serving cell includes a neighboring cell.

In some embodiments, the reporting mode of the beam report includes at least one of the following: reporting based on a non-beam-group form; and reporting based on a beam group form.

In some embodiments, the beam report includes at least one of the following: a quality value of a second beam; an identification of the second beam; quality values of beams included in a second beam set; identifications of beams included in a second beam set; quality values of beams included in a second beam group set; and identifications of beams included in a second beam group set.

FIG. 5 is an interactive schematic diagram of a communication method according to an embodiment of the present disclosure. As shown in FIG. 5, the embodiments of the present disclosure relate to a communication method, which includes:
**in step S5101**, a terminal 101 determines a first condition.

In some embodiments, the first condition is determined based on first information or based on default rules of a protocol.

For optional implementations of step S5101, reference can be made to the optional implementations of step S2101 and step S2102 in FIG. 2, step S3101 to step S3102 in FIG. 3A, and step S4101 in FIG. 4A, as well as other related parts in the embodiments involved in FIGS. 2, 3A, and 4A, which will not be repeated here.

**In step S5102**, the terminal 101 meets the first condition, and sends a beam report to a network device 102.

In some embodiments, the network device 102 receives the beam report, which is reported by terminal 101 in the case where the first condition is met.

For optional implementations of step S5102, reference can be made to the optional implementations of step S2103 in FIG. 2, step S3103 in FIG. 3A, and step S4102 in FIG. 4A, as well as other related parts in the embodiments involved in FIGS. 2, 3A, and 4A, which will not be repeated here.

In some embodiments, the above methods can include the methods described in the embodiments of the communication system side, the terminal side, the network device side, etc., which will not be repeated here.

The embodiments of the present disclosure also provide a communication method in which the terminal performs measurement and determines whether trigger time is met, and only performs beam reporting when the trigger time is met, thereby reducing signaling overhead and ensuring timely reporting when the beam quality changes.

In some embodiments, the terminal receives indication information, the indication information indicates a triggering event, and the triggering event is used to trigger a beam report.

In some embodiments, the triggering event includes at least one of the following: the current beam is below a threshold; a candidate beam is above a threshold; a candidate beam is higher than the current beam by an offset; at least one beam differs between the best K beams and the best K beams among beams reported previously, or the best K beams do not include the best beam(s) previously reported, or the best K beams do not include the beam most recently indicated by the base station; in a case of beam group set based reporting (beam based beam reporting), K groups are different from the K groups reported previously; and in the case of beam group set based reporting, a value of a beam in a group that is previously reported has changed, and the changed amount exceeds a threshold.

In some embodiments, the current beam is: the best beam among beams reported previously, or the beam that is most recently indicated by the base station, or all beams reported previously, or the worst beam among beams reported previously.

In some embodiments, the candidate beam is defined as: a non-optimal beam among beams reported previously, a beam other than the beams reported previously, or a beam other than the beam recently indicated by the base station.

In some embodiments, at least one beam differing between the best K beams and the best K beams previously reported or the best K beams not including the best beam(s) previously reported, or the best K beams do not include the beam most recently indicated by the base station includes at least one of the following:
a difference between the best beams within two sets is above an offset; and a difference between the worst beams within the two sets is above an offset.

In some embodiments, the beam group set based reporting includes groups for downlink reception and/or uplink transmission.

In some embodiments, the K groups being different from the K groups previously reported includes at least one of the following: one beam changes in at least one group; the changed beam in at least one group, a quality of a candidate beam is above a threshold, or a quality of the previously reported beam is below a threshold, or the quality of the candidate beam is higher than the quality of the previously reported beam by an offset; or depending on a joint quality of the two beams, the joint quality of the candidate group is higher than a threshold, the current beam joint quality is lower than a threshold, or the joint quality of the candidate group is higher than the current joint quality by an offset.

In some embodiments, one beam is taken from each of the two groups (what is actually reported is a reference signal resource ID, SSB ID, CSI-RS ID), and the two beams can support, for the terminal, simultaneous reception or simultaneous transmission, or support both simultaneous reception and simultaneous transmission.

Furthermore, in reporting, it needs to indicate whether simultaneous reception or simultaneous transmission, or both simultaneous reception and simultaneous transmission is supported.

In some embodiments, each group includes two beams (what is actually reported is the reference signal resource ID, SSB ID, CSI-RS ID), these two beams can support, for the terminal, simultaneous reception or simultaneous transmission, or both simultaneous reception and simultaneous transmission.

Furthermore, in reporting, it needs to indicate whether simultaneous reception or simultaneous transmission, or both simultaneous reception and simultaneous transmission is supported.

In some embodiments, the joint quality can be considered as an average of the two beams.

In some embodiments, the indication information includes at least one of the following:
an RRC signaling configured trigger event, a trigger event related threshold, an offsets, or the like, and the terminal then performs reporting in a case where the trigger event is met; and
an RRC signaling configured trigger event, a trigger event related threshold, an offsets, or the like, and after further using MAC CE activation or DCI indication, the terminal then performs reporting in a case where the trigger event is met.

In some embodiments, RRC configuration can also configure an association, such as the association between the triggering event and the related threshold or offsets with the reference signal resource or resource set (including CMR and/or IMR, where the reference signal resource can be a reference signal resource for periodical, semi-persistent, or aperiodic transmission), with the reported measurement L1-RSRP or L1-SINR, the reporting type (semi-persistently or aperiodically transmitting the report), the reporting mode (whether it is a group based beam report, whether it is used for simultaneous uplink transmission and/or simultaneous downlink reception, which can be configured by the base station, or the terminal itself reports which type it is), and an ID after the association, and the MAC CE or DCI can directly activate or indicate the ID. If it is DCI indication, it can directly reuse or extend the CSI request field.

In some embodiments, after the triggering condition is met, reporting can be performed once or multiple times, and a time interval between each reporting can be configured.

In some embodiments, the beam report can include a beam value of a serving cell or a cell other than the serving cell, such as a neighboring cell, of which a physical cell ID (PCI) is configured for the terminal.

In some embodiments, in the case where the beam report includes measurements of the neighboring cell, it can be either non-group reporting or group-based beam reporting.

It should be understood that through event-triggered beam reporting, the embodiments ensure the accuracy and timeliness of beam measurements while reducing signaling overhead.

In the embodiments of the present disclosure, some or all of the steps and the optional implementations thereof can be arbitrarily combined with some or all of the steps in other embodiments, or can be arbitrarily combined with the optional implementations in other embodiments.

The embodiments of the present disclosure also provide an apparatus for implementing any of the above methods. For example, an apparatus is provided that includes units or modules for implementing the steps performed by the terminal in any of the above methods. For another example, another apparatus is provided that includes units or modules for implementing the steps performed by the network device (e.g., an access network device, a core network functional node, a core network device, etc.) in any of the above methods.

It should be understood that the division of units or modules in the above apparatuses is only a logical functional division, and in actual implementations, they may be fully or partially integrated into a single physical entity, or they may be physically separated. Furthermore, the units or modules in the apparatus may be implemented in the form of a processor invoking software: for example, the apparatus includes a processor connected to a memory storing instructions, and the processor invokes the instructions stored in the memory to implement any of the above-mentioned methods or the functions of the various units or modules in the above-mentioned apparatus. The processor is, for example, a general-purpose processor, such as a Central Processing Unit (CPU) or a microprocessor, and the memory is a memory internal or external to the apparatus. Alternatively, the units or modules in the apparatus may be implemented in the form of hardware circuits, and the functionality of some or all of the units or modules may be realized by designing the hardware circuits, which can be understood as one or more processors. For example, in an implementation, the hardware circuit is an application-specific integrated circuit (ASIC), and the functionality of some or all of the units or modules may be realized by designing the logical relationships between the components within the circuit. For another example, in another implementation, the hardware circuit may be implemented by programmable logic devices (PLDs), such as a fieldprogrammable gate array (FPGA), which may include a large number of logic gate circuits, and the connection relationships between the logic gate circuits are configured through configuration files, thereby achieving the functionality of some or all of the units or modules. All units or modules of the above apparatuses can be implemented entirely in the form of a processor invoking software, entirely in the form of hardware circuits, or partially by a processor invoking software with the remainder implemented by hardware circuits.

In the embodiments of the present disclosure, the processor is a circuit with signal processing capabilities. In an implementation, the processor can be a circuit with capabilities of reading and executing instructions, such as a Central Processing Unit (CPU), a microprocessor, a graphics processing unit (GPU) (which can be understood as a microprocessor), or a digital signal processor (DSP). In another implementation, the processor can implement certain functions through the logical relationships of hardware circuits, where the logical relationships of the hardware circuits are fixed or reconfigurable. For example, the processor is a hardware circuit implemented through an application-specific integrated circuit (ASIC) or programmable logic devices (PLDs), such as an FPGA. In the reconfigurable hardware circuit, the process of the processor loading a configuration file and implementing hardware circuit configuration can be understood as the process of the processor loading instructions to implement the functions of some or all of the above units or modules. Furthermore, the processor can also be a hardware circuit designed for artificial intelligence, which can be understood as an ASIC, such as a Neural Network Processing Unit (NPU), a Tensor Processing Unit (TPU), a Deep Learning Processing Unit (DPU), etc.

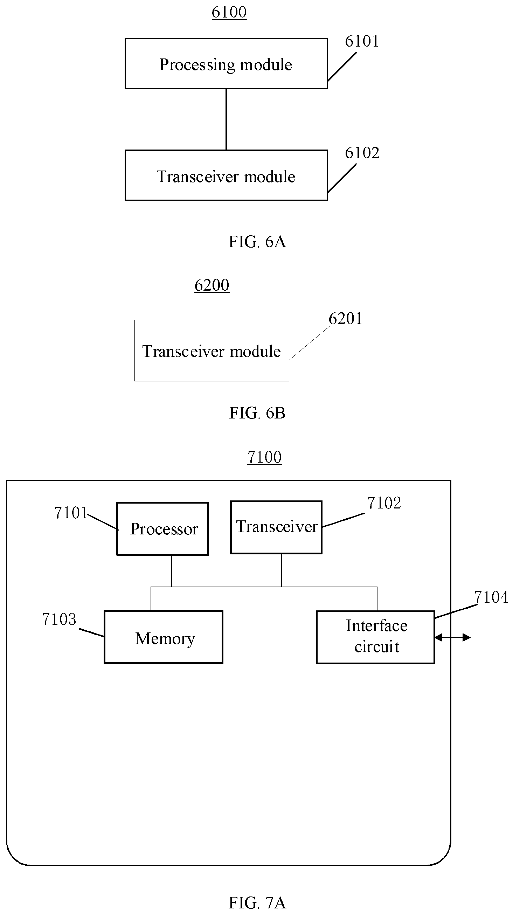

FIG. 6A is a schematic diagram of a structure of a terminal according to an embodiment of the present disclosure. As shown in FIG. 6A, the terminal 6100 can include at least one of a processing module 6101, a transceiver module 6102, etc. In some embodiments, the processing module is configured to determine a first condition. Optionally, the processing module is configured to perform at least one of the other steps (e.g., step S2102, but it is not limited thereto) performed by the terminal 101 in any of the above methods, which will not be described in detail here. Optionally, the transceiver module is configured to perform at least one of the communication steps performed by the terminal 101 such as sending and/or receiving in any of the above methods (e.g., step S2101, step S2103, but it is not limited thereto), which will not be described in detail here.

FIG. 6B is a schematic diagram of a structure of a network device according to an embodiment of the present disclosure. As shown in FIG. 6B, the network device 6200 can include at least one of a transceiver module 6201, etc. In some embodiments, the transceiver module is configured to perform at least one of the communication steps such as sending and/or receiving performed by the network device 102 in any of the above methods (such as step S2101, step S2103, but it is not limited thereto), which will not be described in detail here.

In some embodiments, the transceiver module can include a transmitting module and/or a receiving module, which can be separate or integrated. Optionally, the transceiver module can be interchanged with a transceiver.

FIG. 7A is a schematic diagram of a structure of a communication device 7100 proposed in an embodiment of the present disclosure. The communication device 7100 can be a network device (e.g., an access network device, a core network device, etc.), a terminal (e.g., user equipment, etc.), a chip, chip system, or processor that supports the network device in implementing any of the above methods, or a chip, chip system, or processor that supports the terminal in implementing any of the above methods. The communication device 7100 can be configured to implement the methods described in the above method embodiments; for details, please refer to the descriptions in the above method embodiments.

As shown in FIG. 7A, the communication device 7100 includes one or more processors 7101. The processor 7101 can be a general-purpose processor or a dedicated processor, such as a baseband processor or a central processing unit (CPU). The baseband processor can be configured to process communication protocols and communication data, while the CPU can be configured to control a communication apparatus (e.g., a base station, a baseband chip, a terminal device, a terminal device chip, a DU, a CU, or the like), execute programs, and process program data. Optionally, the communication device 7100 can be configured to perform any of the above methods. Optionally, one or more processors 7101 can be configured to invoke instructions to cause the communication device 7100 to perform any of the above methods.

In some embodiments, the communication device 7100 further includes one or more transceivers 7102. When the communication device 7100 includes one or more transceivers 7102, the transceivers 7102 perform at least one of the communication steps such as sending and/or receiving in the above methods (e.g., steps S2102, S2103, but it is not limited thereto), and the processor 7101 performs at least one of other steps (e.g., step S2101, but it is not limited thereto). In optional embodiments, the transceivers can include a receiver and/or a transmitter, and the receiver and the transmitter can be separate or integrated. Optionally, the terms transceiver, transceiving unit, transceiving machine, transceiving circuit, etc., can be used interchangeably; the terms transmitter, transmitting unit, transmitting machine, transmitting circuit, etc., can be used interchangeably; and the terms receiver, receiving unit, receiving machine, receiving circuit, etc., can be used interchangeably.

In some embodiments, the communication device 7100 further includes one or more memories 7103 for storing data. Optionally, all or part of the memories 7103 can also be located outside the communication device 7100. In an optional embodiment, the communication device 7100 can include one or more interface circuits 7104. Optionally, the interface circuit 7104 is connected with the memory 7103, and the interface circuit 7104 can be configured to receive data from the memory 7103 or other devices, and can be configured to send data to the memory 7103 or other devices. For example, the interface circuit 7104 can read data stored in the memory 7103 and send the data to the processor 7101.

The communication device 7100 described in the above embodiments may be a network device or a terminal, but the scope of the communication device 7100 described in the present disclosure is not limited thereto, and the structure of the communication device 7100 may not be limited by FIG. 7A. The communication device can be a standalone device or can be part of a larger device. For example, the communication device may be: (1) an independent integrated circuit IC, or chip, or chip system or subsystem; (2) a collection of one or more ICs, optionally, the IC collection may also include a storage component for storing data and programs; (3) an ASIC, such as a modem; (4) a module that can be embedded in other devices; (5) a receiver, a terminal device, a smart terminal device, a cellular phone, a wireless device, a handheld device, a mobile unit, an in-vehicle device, a network device, a cloud device, an artificial intelligence device, etc.; and (6) others, etc.

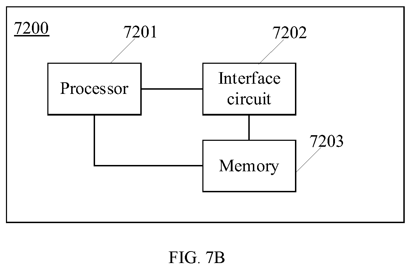

FIG. 7B is a schematic diagram of a structure of a chip 7200 according to an embodiment of the present disclosure. For cases where the communication device 7100 can be a chip or a chip system, please refer to the schematic diagram of chip 7200 shown in FIG. 7B, but it is not limited thereto.

The chip 7200 includes one or more processors 7201, and the chip 7200 is configured to perform any of the above methods.

In some embodiments, the chip 7200 further includes one or more interface circuits 7202. Optionally, terms such as interface circuit, interface, and transceiver pin can be used interchangeably. In some embodiments, the chip 7200 further includes one or more memories 7203 for storing data. Optionally, all or part of the memories 7203 can be located outside the chip 7200. Optionally, the interface circuit 7202 is connected to the memory 7203, and interface circuit 7202 can be configured to receive data from the memory 7203 or other devices, and the interface circuit 7202 can be configured to send data to the memory 7203 or other devices. For example, the interface circuit 7202 can read data stored in memory 7203 and send the data to the processor 7201.

In some embodiments, the interface circuit 7202 performs at least one of the communication steps such as sending and/or receiving in the above methods (e.g., steps S2102, S2103, but it is not limited thereto). The interface circuit 7202 performing the communication steps such as sending and/or receiving in the above methods means that the interface circuit 7202 performs data interaction between the processor 7201, the chip 7200, the memory 7203, or the transceiver device. In some embodiments, the processor 7201 performs at least one of other steps (e.g., step S2101, but it is not limited thereto).

The modules and/or devices described in the various embodiments, such as virtual devices, physical devices, and chips, can be arbitrarily combined or separated as needed. Optionally, some or all of the steps can also be performed through collaboration of multiple modules and/or devices, which is not limited here.

The present disclosure also proposes a storage medium storing instructions that, when executed on the communication device 7100, cause the communication device 7100 to perform any of the above methods. Optionally, the storage medium is an electronic storage medium. Optionally, the storage medium is a computer-readable storage medium, but not limited thereto; it may also be a storage medium readable by other devices. Optionally, the storage medium may be a non-transitory storage medium, but not limited thereto; it may also be a transitory storage medium.

The present disclosure also provides a program product that, when executed by the communication device 7100, causes the communication device 7100 to perform any of the above methods. Optionally, the program product is a computer program product.

The present disclosure also proposes a computer program that, when running on a computer, causes the computer to perform any of the above methods.

## Claims

1. A communication method, the method comprising:
determining a first condition; and
the first condition being met, sending a beam report.

2. The method according to claim 1, wherein the first condition being met comprises at least one of the following:
a quality value of a first beam is less than or equal to a first quality value threshold, the first beam being a current beam;
a quality change value of a first beam is greater than or equal to a first quality change value threshold;
a quality value of a second beam is greater than or equal to a second quality value threshold, the second beam being a candidate beam;
a first quality value difference is greater than or equal to a first quality value difference threshold, the first quality value difference being a difference between a quality value of a second beam and a quality value of a first beam;
a first beam set is different from a second beam set, wherein the first beam set comprises K beams with the best quality values that are reported most recently, and the second beam set comprises L beams with the best quality values that are currently acquired, K being an integer greater than or equal to 1, and L being an integer greater than or equal to 1;
the second beam set does not comprise a beam that is most recently indicated by a network device;
at least one beam group is different between a first beam group set and a second beam group set, wherein the first beam group set comprises M first beam groups that are reported most recently, the second beam group set comprises N second beam groups that are currently acquired, and each of the beam groups comprises a beam for which the terminal supports at least one of simultaneous transmission and simultaneous reception;
a candidate beam exists in the second beam group set, and a quality value of the candidate beam is greater than or equal to a fifth quality value threshold;
a quality value of a beam in the first beam group set is less than or equal to a sixth quality value threshold;
a candidate beam exists in the second beam group set, and a quality value of the candidate beam is greater than or equal to a quality value of a beam in the first beam group set;
a joint quality value of beams in the second beam group is greater than or equal to a first joint quality value threshold, wherein the second beam group comprises beams for which the terminal supports at least one of simultaneous transmission and simultaneous reception;
a joint quality value of the first beam group is less than or equal to a third joint quality value threshold;
a joint quality difference between the joint quality value of the second beam group and the joint quality value of the first beam group is greater than or equal to a joint quality difference threshold; and
a second quality value difference is greater than or equal to a second quality value difference threshold, wherein the second quality difference is an amount of change in a beam quality value of a beam in the first beam group of which the beam quality value changes.

3. The method according to claim 2, wherein the first beam comprises at least one of the following:
a beam with a highest quality value among beams that are most recently reported by a terminal;
a beam that is most recently indicated by the network device;
all beams that are most recently reported by the terminal; and
a beam with a lowest quality value among beams that are most recently reported by the terminal.

4. The method according to claim 2 or 3, wherein the second beam comprises at least one of the following:
a beam with a quality value being not the highest among beams that are most recently reported by a terminal;
a beam different from a beam that is most recently indicated by the network device; and
a beam different from beams that are most recently reported.

5. The method according to any one of claims 2 to 4, wherein the first beam set being different from the second beam set comprises at least one of the following:
at least one beam is different between the first beam set and the second beam set;
the second beam set does not comprises at least one best beam in the first beam set; and
a third quality value difference is greater than or equal to a third quality value difference threshold, the third quality value difference being a difference between a quality value of any beam in the second beam set and a quality value of any beam in the first beam set.

6. The method according to any one of claims 2 to 5, wherein at least one beam group being different between the first beam group set and the second beam group set comprises at least one of the following:
a changed quality value of a third beam is greater than or equal to a third quality value threshold; and
the changed quality value of the third beam is less than or equal to a fourth quality value threshold;
wherein the third beam exists in at least one of the following beam group sets: the first beam group set and the second beam group set, and the third beam is a beam whose quality value has changed.

7. The method according to claim 6, wherein the second beam group comprises beams from different beam groups, or the second beam group comprises beams from the same beam group.

8. The method according to any one of claims 1 to 7, wherein determining the first condition comprises obtaining first information, and obtaining the first information comprises:
obtaining first signaling; or
obtaining first and second signaling;
wherein the first signaling is used to configure an association between at least one of the following: a first identification, a first condition, a threshold, a difference threshold, a reference signal resource, a reference signal resource set, a measured quantity, a reporting type, and a reporting mode;
the second signaling is used to activate the first condition or the first identification configured by the first signaling;
the threshold comprises at least one of the following: a first quality value threshold, a second quality value threshold, a third quality value threshold, a fourth quality value threshold, a fifth quality value threshold, a sixth quality value threshold, a first quality change value threshold, a first joint quality value threshold, a second joint quality value threshold, and a third joint quality value threshold; and
the difference threshold comprises at least one of the following: a first quality value difference threshold, a second quality value difference threshold, a third quality value difference threshold, and a joint quality difference threshold.

9. The method according to any one of claims 1 to 8, wherein the reporting type of the beam report comprises at least one of the following:
reporting a single beam report; and
reporting multiple beam reports, with a time interval between the multiple beam reports.

10. The method according to any one of claims 1 to 9, wherein the beam report comprises a beam value of at least one of the following:
a serving cell, and a cell different from the serving cell.

11. The method according to claim 10, wherein the cell different from the serving cell comprises a neighboring cell.

12. The method according to any one of claims 1 to 11, wherein the reporting mode of the beam report comprises at least one of the following:
reporting based on a non-beam-group form; and
reporting based on a beam group form.

13. The method according to any one of claims 1 to 12, wherein the beam report comprises at least one of the following:
a quality value of a second beam;
an identification of the second beam;
a quality value of a beam comprised in a second beam set;
an identification of the beam comprised in the second beam set;
a quality value of a beam comprised in a second beam group set; and
an identification of the beam comprised in the second beam group set.

14. A communication method, the method comprising:
receiving a beam report, wherein the beam report is reported by a terminal in a case where a first condition is met.

15. The method according to claim 14, wherein the first condition being met comprises at least one of the following:
a quality value of a first beam is less than or equal to a first quality value threshold, the first beam being a current beam;
a quality change value of a first beam is greater than or equal to a first quality change value threshold;
a quality value of a second beam is greater than or equal to a second quality value threshold, the second beam being a candidate beam;
a first quality value difference is greater than or equal to a first quality value difference threshold, the first quality value difference being a difference between a quality value of a second beam and a quality value of a first beam;
a first beam set is different from a second beam set, wherein the first beam set comprises K beams with the best quality values that are reported most recently, and the second beam set comprises L beams with the best quality values that are currently acquired, K being an integer greater than or equal to 1, and L being an integer greater than or equal to 1;
the second beam set does not comprise a beam that is most recently indicated by a network device;
at least one beam group is different between a first beam group set and a second beam group set, wherein the first beam group set comprises M first beam groups that are reported most recently, the second beam group set comprises N second beam groups that are currently acquired, and each of the beam groups comprises a beam for which the terminal supports at least one of simultaneous transmission and simultaneous reception;
a candidate beam exists in the second beam group set, and a quality value of the candidate beam is greater than or equal to a fifth quality value threshold;
a quality value of a beam in the first beam group set is less than or equal to a sixth quality value threshold;
a candidate beam exists in the second beam group set, and a quality value of the candidate beam is greater than or equal to a quality value of a beam in the first beam group set;
a joint quality value of beams in the second beam group is greater than or equal to a first joint quality value threshold, wherein the second beam group comprises beams for which the terminal supports at least one of simultaneous transmission and simultaneous reception;
a joint quality value of the second beam group and a joint quality value of the first beam group are greater than a second joint quality value threshold;
a joint quality value of the first beam group is less than or equal to a third joint quality value threshold;
a joint quality difference between the joint quality value of the second beam group and the joint quality value of the first beam group is greater than or equal to a joint quality difference threshold; and
a second quality value difference is greater than or equal to a second quality value difference threshold, wherein the second quality difference is an amount of change in a beam quality value of a beam in the first beam group of which the beam quality value changes.

16. The method according to claim 15, wherein the first beam comprises at least one of the following:
a beam with a highest quality value among beams that are most recently reported by a terminal;
a beam that is most recently indicated by the network device;
all beams that are most recently reported by the terminal; and
a beam with a lowest quality value among beams that are most recently reported by the terminal.

17. The method according to claim 15 or 16, wherein the second beam comprises at least one of the following:
a beam with a quality value being not the highest among beams that are most recently reported by a terminal;
a beam different from a beam that is most recently indicated by the network device; and
a beam different from beams that are most recently reported.

18. The method according to any one of claims 15 to 17, wherein the first beam set being different from the second beam set comprises at least one of the following:
at least one beam is different between the first beam set and the second beam set;
the second beam set does not comprises at least one best beam in the first beam set; and
a third quality value difference is greater than or equal to a third quality value difference threshold, the third quality value difference being a difference between a quality value of any beam in the second beam set and a quality value of any beam in the first beam set.

19. The method according to any one of claims 15 to 18, wherein at least one beam group being different between the first beam group set and the second beam group set comprises at least one of the following:
a changed quality value of a third beam is greater than or equal to a third quality value threshold; and
the changed quality value of the third beam is less than or equal to a fourth quality value threshold;
wherein the third beam exists in at least one of the following beam group sets: the first beam group set and the second beam group set, and the third beam is a beam whose quality value has changed.

20. The method according to claim 19, wherein the second beam group comprises beams from different beam groups, or the second beam group comprises beams from the same beam group.

21. The method according to any one of claims 14 to 19, wherein the first condition is determined by the terminal by obtaining first information, and obtaining the first information comprises:
obtaining first signaling; or
obtaining first and second signaling;
wherein the first signaling is used to configure an association between at least one of the following: a first identification, a first condition, a threshold, a difference threshold, a reference signal resource, a reference signal resource set, a measured quantity, a reporting type, and a reporting mode;
the second signaling is used to activate the first condition or the first identification configured by the first signaling;
the threshold comprises at least one of the following: a first quality value threshold, a second quality value threshold, a third quality value threshold, a fourth quality value threshold, a fifth quality value threshold, a sixth quality value threshold, a first quality change value threshold, a first joint quality value threshold, a second joint quality value threshold, and a third joint quality value threshold; and
the difference threshold comprises at least one of the following: a first quality value difference threshold, a second quality value difference threshold, a third quality value difference threshold, and a joint quality difference threshold.

22. The method according to any one of claims 14 to 21, wherein the reporting type of the beam report comprises at least one of the following:
reporting a single beam report; and
reporting multiple beam reports, with a time interval between the multiple beam reports.

23. The method according to any one of claims 14 to 22, wherein the beam report comprises a beam value of at least one of the following:
a serving cell, and a cell different from the serving cell.

24. The method according to claim 23, wherein the cell different from the serving cell comprises a neighboring cell.

25. The method according to any one of claims 14 to 24, wherein the reporting mode of the beam report comprises at least one of the following:
reporting based on a non-beam-group form; and
reporting based on a beam group form.

26. The method according to any one of claims 14 to 25, wherein the beam report comprises at least one of the following:
a quality value of a second beam;
an identification of the second beam;
a quality value of a beam comprised in a second beam set;
an identification of the beam comprised in the second beam set;
a quality value of a beam comprised in a second beam group set; and
an identification of the beam comprised in the second beam group set.

27. A communication method, wherein the method comprises: determining, by a terminal, a first condition; and the first condition being met, reporting a first report to a network device.

28. A terminal, comprising:
a processing module, configured to determine a first condition; and
a transceiver module, configured to report a beam report in a case where the first condition is met.

29. A network device, comprising:
a transceiver module, configured to receive a beam report, the beam report being reported by a terminal in a case where a first condition is met.

30. A terminal, comprising:
one or more processors;
wherein the processors are configured to perform the communication method according to any one of claims 1 to 13.

31. A network device, comprising:
one or more processors;
wherein the processors are configured to perform the communication method according to any one of claims 14 to 26.

32. A communication system, comprising a terminal and a network device, wherein the terminal is configured to implement the communication method according to any one of claims 1 to 13, and the network device is configured to implement the communication method according to any one of claims 14 to 26.

33. A storage medium storing instructions, wherein the instructions, when running on a communication device, cause a communication device to perform the communication method according to any one of claims 1 to 13 or 14 to 26.
